(19) Europäisches Patentamt
European Patent Office
Office européen des brevets

(11) EP 4 008 031 B1

(12) **FASCICULE DE BREVET EUROPEEN**

(45) Date de publication et mention de la délivrance du brevet:
**06.09.2023 Bulletin 2023/36**

(21) Numéro de dépôt: **20785813.5**

(22) Date de dépôt: **16.09.2020**

(51) Classification Internationale des Brevets (IPC):
***H01M 4/02*** *(2006.01)* ***H01M 4/04*** *(2006.01)*
***H01M 4/139*** *(2010.01)* ***H01M 4/62*** *(2006.01)*

(52) Classification Coopérative des Brevets (CPC):
**H01M 4/0404; H01M 4/139; H01M 4/622; H01M 4/623;** H01M 2004/023; Y02E 60/10

(86) Numéro de dépôt international:
**PCT/FR2020/051599**

(87) Numéro de publication internationale:
**WO 2021/053293 (25.03.2021 Gazette 2021/12)**

(54) **PROCÉDÉ DE FABRICATION D'UNE ÉLECTRODE COMPRENANT UNE MATRICE POLYMÉRIQUE PIÉGEANT UN ÉLECTROLYTE**

VERFAHREN ZUR HERSTELLUNG EINER ELEKTRODE MIT EINER EINEN ELEKTROLYTEN EINFANGENDEN POLYMERMATRIX

METHOD FOR MANUFACTURING AN ELECTRODE COMPRISING A POLYMER MATRIX TRAPPING AN ELECTROLYTE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.09.2019 FR 1910257**

(43) Date de publication de la demande:
**08.06.2022 Bulletin 2022/23**

(73) Titulaires:
- **Commissariat à l'énergie atomique et aux énergies alternatives 75015 Paris (FR)**
- **Solvay SA 1120 Brussels (BE)**

(72) Inventeurs:
- **SALOMON, Jérémie 38054 GRENOBLE CEDEX 09 (FR)**
- **ABUSLEME, Julio 21047 SARONNO (VARESE) (IT)**
- **AMESTOY, Benjamin 38054 GRENOBLE CEDEX 09 (FR)**
- **BRAIDA, Marc-David 94360 BRY SUR MARNE (FR)**
- **ROUAULT, Hélène 38054 GRENOBLE CEDEX 09 (FR)**
- **BASCOUR, Dominique 1390 GREZ-DOICEAU (BE)**

(74) Mandataire: **Brevalex**
**Tour Trinity**
**1 B Place de la Défense**
**92400 Courbevoie (FR)**

(56) Documents cités:
**EP-A2- 3 483 953 US-A1- 2017 077 505**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 4 008 031 B1

## Description

## DOMAINE TECHNIQUE

La présente invention a trait à un procédé de fabrication d'une électrode comprenant une matrice polymérique piégeant un électrolyte, plus spécifiquement, un électrolyte liquide pouvant former un gel avec la matrice polymérique (auquel cas l'électrode peut être qualifiée d'électrode ionogel), cette électrode étant destinée à être incorporée dans des accumulateurs électrochimiques.

Le domaine général de l'invention peut être défini comme celui des dispositifs de stockage d'énergie, en particulier, celui des accumulateurs électrochimiques.

## ÉTAT DE LA TECHNIQUE

Les accumulateurs électrochimiques fonctionnent sur le principe de cellules électrochimiques aptes à délivrer un courant électrique grâce à la présence dans chacune d'entre elles d'un couple d'électrodes (respectivement, une électrode positive et une électrode négative) séparées par un électrolyte, les électrodes comprenant des matériaux spécifiques aptes à réagir selon une réaction d'oxydo-réduction, moyennant quoi il y a échange d'électrons à l'origine du courant électrique et échange d'ions qui vont circuler d'une électrode à l'autre par le biais d'un électrolyte.

Parmi les accumulateurs souscrivant à ce principe, les accumulateurs fonctionnant sur le principe d'insertion-désinsertion d'un élément métallique intervenant au niveau des électrodes (et plus spécifiquement, des matériaux actifs d'électrodes) et connus sous la terminologie d'accumulateurs métal-ion (par exemple, Li-ion, Na-ion, K-ion, Ca-ion, Mg-ion ou Al-ion) ont supplanté les autres types d'accumulateurs, tels que les accumulateurs acide-plomb, les accumulateurs Ni-MH, notamment pour leurs performances en termes de densités d'énergie. En effet, les accumulateurs M-ion, tels que les accumulateurs Li-ion, permettent, en particulier, d'obtenir des densités d'énergie massique et volumique (pouvant être supérieures à 180 $Wh.kg^{-1}$) nettement supérieures à celles des accumulateurs Ni-MH et Ni-Cd (pouvant aller de 50 et 100 $Wh.kg^{-1}$) et Acide-plomb (pouvant aller de 30 à 35 $Wh.kg^{-1}$).

D'un point de vue fonctionnel, dans les accumulateurs métal-ion, la réaction à l'origine de la production de courant (c'est-à-dire lorsque l'accumulateur est en mode de décharge) met en jeu le transfert, par l'intermédiaire d'un électrolyte conducteur d'ions métalliques, de cations métalliques provenant d'une électrode négative qui viennent s'intercaler dans le réseau accepteur de l'électrode positive, tandis que des électrons issus de la réaction à l'électrode négative vont alimenter le circuit extérieur, auquel sont reliées les électrode positive et négative.

Plus spécifiquement, dans le cas d'un accumulateur Li-ion, l'électrode positive peut comprendre, comme matériaux d'insertion du lithium, des composés phosphatés à base de lithium (par exemple, $LiFePO_4$), un oxyde de manganèse lithié, éventuellement substitué (tel que $LiMn_2O_4$), un matériau à base de lithium-nickel-manganèse-cobalt $LiNi_xMn_yCo_zO_2$ avec x+y+z=1 (connu également sous l'abréviation NMC), tel que $LiNi_{0,33}Mn_{0,33}Co_{0,33}O_2$ ou $LiNi_{0,6}Mn_{0,2}Co_{0,2}O_2$, un matériau à base de lithium-nickel-cobalt-aluminium $LiNi_xCo_yAl_zO_2$ avec x+y+z = 1 (connu également sous l'abréviation NCA), tel que $LiNi_{0,8}Co_{0,15}Al_{0,05}O_2$.

L'électrode négative peut comprendre, comme matériaux d'insertion du lithium, un matériau carboné, tel que du graphite, un composé à base de silicium, tel qu'un carbure de silicium SiC ou un oxyde de silicium $SiO_x$, un oxyde de titane lithié, tel que $Li_4TisO_{12}$, un alliage lithium-germanium ou bien un mélange de plusieurs de ces matériaux d'insertion du lithium, tel qu'un mélange comprenant du graphite et un composé à base de silicium.

Comme mentionné ci-dessus, entre l'électrode négative et l'électrode positive, est disposé un électrolyte, qui va permettre le déplacement d'ions (issus généralement d'un sel métallique présent dans l'électrolyte) de l'électrode positive vers l'électrode négative lors d'une charge et inversement lors d'une décharge.

Cet électrolyte peut se présenter sous une forme liquide et comprend, classiquement, un ou plusieurs solvants organiques (par exemple, un mélange de solvants carbonates), dans lequel est (sont) dissous un ou plusieurs sels métalliques (par exemple, un ou plusieurs sels de lithium, lorsque l'accumulateur est un accumulateur lithium-ion).

Toutefois, l'utilisation d'un électrolyte liquide présente un certain nombre d'inconvénients parmi les suivants :

- le problème de fuite de l'électrolyte liquide hors de la cellule ;
- la possibilité que l'électrolyte liquide réagisse chimiquement avec l'oxygène du matériau actif de l'électrode positive, lorsqu'un emballement thermique se produit dans la cellule comprenant cet électrolyte, pouvant ainsi générer un important volume de gaz, dont la conséquence peut être l'inflammation voire l'explosion de la cellule.

Pour contourner ces inconvénients, une alternative consiste à s'affranchir de l'utilisation d'un électrolyte liquide en le remplaçant, par exemple, par les solutions suivantes :

- un verre ou une céramique conducteurs d'ions lithium se présentant sous une forme purement solide, par exemple, une couche mince déposée par dépôt chimique en phase vapeur (CVD) telle qu'une couche en LIPON, ou une couche d'un matériau composite comprenant une matrice polymérique,

par exemple, en polyfluorure de vinylidène, et une charge constituée d'un oxyde lithié, tel que $Li_7La_3Zr_2O_{12}$;

- un électrolyte solide polymère sec composé d'un polymère du type polyoxyde d'éthylène (POE) et d'un sel de lithium, par exemple, du bis(trifluorosulfonyl)imidure de lithium (LiTFSI).

Toutefois, ces différentes solutions présentent toutes, à l'heure actuelle, un certain nombre d'inconvénients.

Concernant l'utilisation de verre ou de céramique conducteurs d'ions lithium, celle-ci nécessite des techniques de mise en oeuvre ou synthèse très complexes à mettre au point dans un contexte industriel, ce qui peut s'avérer rédhibitoire pour la production à grande échelle des accumulateurs.

Concernant les électrolytes solides polymères secs, leur conductivité ionique, à température ambiante, est généralement inférieure à $10^{-5}$ S. $cm^{-1}$, alors que, pour un électrolyte liquide conventionnel, la conductivité ionique est de l'ordre de $10^{-3}$ $S.cm^{-1}$, voire $10^{-2}$ $S.cm^{-1}$ à température ambiante. De ce fait, il peut s'avérer nécessaire d'utiliser les accumulateurs comportant un électrolyte polymère sec à des températures plus élevées que la température ambiante, par exemple, une température s'échelonnant de 60 à 80°C pour favoriser la diffusion des ions lithium au sein de l'électrolyte.

Pour maîtriser les inconvénients liés à l'utilisation d'un électrolyte liquide et ceux des électrolytes solides susmentionnés, une nouvelle technologie développée et illustrée dans WO2015169835 consiste à piéger l'électrolyte liquide dans une matrice polymérique faisant partie intégrante de l'électrode positive et l'électrode négative (ces électrodes pouvant être qualifiées d'électrodes ionogels), cette technologie permettant d'obtenir à température ambiante des performances électrochimiques équivalentes à celles d'un accumulateur lithium-ion comportant un électrolyte liquide non piégé dans une matrice polymérique.

Ces électrodes sont préparées de manière classique par un procédé comprenant successivement les étapes suivantes :

- une étape de fabrication d'une encre (c'est-à-dire une dispersion liquide comprenant en suspension les ingrédients solides de l'électrode) par mélange des différents ingrédients destinés à entrer dans la constitution de l'électrode, à savoir, le matériau actif, le ou les additifs conducteurs électroniques, un (co)polymère fluoré qui permet le piégeage de l'électrolyte liquide, au moins un solvant de ce copolymère fluoré (par exemple, l'acétone), un sel de lithium, un ou plusieurs solvants d'électrolyte (tels que des solvants carbonates) pour solubiliser le sel de lithium;
- une fois l'encre obtenue, une étape de dépôt de celle-ci, généralement, par enduction sur un support formant le collecteur de courant ;
- une étape d'évaporation du ou des solvant(s) du (co)polymère fluoré suivie éventuellement d'une étape de calandrage moyennant quoi il subsiste l'électrode spécifique.

L'étape de fabrication de l'encre, qui se produit généralement dans des mélangeurs traditionnels, tels qu'un disperseur ou un mélangeur planétaire, nécessite une proportion de solvant(s) importante, ce qui limite le pourcentage de masse solide dans l'encre. Plus spécifiquement, le pourcentage de masse solide par rapport à la masse totale de l'encre est généralement compris entre 35 et 49% massique, tandis que la masse de l'électrolyte liquide (sel +solvant(s) d'électrolyte) est comprise entre 6 et 13% de la masse totale de l'encre et le ou les solvant(s) du (co)polymère fluoré est compris entre 45 et 57 % de la masse totale de l'encre.

La présence d'une telle quantité de solvant(s) constitue un facteur limitant pour la mise en oeuvre d'un tel procédé, notamment au niveau industriel, car il implique de mettre en place une gestion des effluents (ici, le solvant utilisé en quantité importante) tant en termes de sécurité (en particulier, en raison du potentiel caractère inflammable du ou des solvants choisis et/ou de la toxicité du ou des solvants choisis) que d'élimination du ou des solvant(s), ce qui engendre, par ailleurs, des coûts importants de mise en oeuvre de ce procédé.

Dans ce contexte, les inventeurs se sont donc fixé pour objectif de proposer un nouveau procédé de fabrication d'une électrode comprenant une matrice polymérique renfermant un électrolyte, qui permet de limiter voire de supprimer l'utilisation d'une quantité importante de solvant (s) et qui soit, de fait, moins coûteux et limite les inconvénients liés à l'utilisation de grandes quantités de solvant(s).

## EXPOSÉ DE L'INVENTION

Pour ce faire, les inventeurs ont mis au point un procédé de fabrication d'une électrode qui ne passe plus par la préparation préalable d'une encre mais par la préparation préalable d'une composition sous forme d'une pâte comprenant les ingrédients destinés à entrer dans la constitution de l'électrode, cette préparation étant rendue possible grâce à l'utilisation d'un mélangeur spécifique au cours de cette étape.

Plus précisément, conformément à l'invention, le procédé de fabrication d'une électrode comprenant une matrice polymérique piégeant un électrolyte comprend les étapes suivantes :

a) une étape de préparation d'une composition comprenant les ingrédients destinés à entrer dans la constitution de l'électrode ;

b) à partir de ladite composition, une étape de formation de l'électrode sur un support ;

caractérisé en ce que :

- la composition préparée lors de l'étape a) est une composition sous forme de pâte ayant une viscosité dynamique supérieure à 5000 Pa.s mesurée à un gradient de cisaillement de 0,1 $s^{-1}$ et à température ambiante ; et
- l'étape de préparation consiste en une introduction et un mélange des ingrédients destinés à entrer dans la constitution de l'électrode dans un mélangeur à deux vis interpénétrantes corotatives tournant dans un fourreau fermé, ladite étape de préparation étant mise en oeuvre à une température inférieure à 100°C.

Grâce à l'utilisation de ce mélangeur spécifique, il est possible d'utiliser une quantité moindre de solvant par rapport à un procédé utilisant des mélangeurs classiques et donc de limiter les inconvénients liés à la gestion des effluents.

En premier lieu, le procédé de l'invention comprend une étape de préparation d'une composition sous forme de pâte comprenant les ingrédients constitutifs de l'électrode par introduction et mélange desdits ingrédients dans un mélangeur à deux vis interpénétrantes co-rotatives tournant dans un fourreau fermé.

L'introduction des ingrédients peut être simultanée ou peut être successive et cette introduction peut être réalisée à des endroits séparés (par exemple, l'introduction des constituants solides dans une première zone d'introduction par l'intermédiaire d'une ou plusieurs entrées du mélangeur et l'introduction des constituants liquides dans une deuxième zone d'introduction par l'intermédiaire d'une ou plusieurs entrées du mélangeur), comme cela peut être le cas avec le mélangeur illustré sur la figure 3 jointe annexe, qui comporte :

- un fourreau fermé 1 ;
- deux vis interpénétrantes 3 et 5 ;
- une première zone d'introduction 7 (dite zone A) des ingrédients ;
- une deuxième zone d'introduction 9 (dite zone B) des ingrédients ; et
- une sortie 11 pour l'évacuation de la composition formée ;
- un moteur 13 relié aux vis pour engendrer leur rotation.

Plus spécifiquement, cette composition peut comprendre, comme ingrédients constitutifs de l'électrode :

- au moins un matériau actif d'électrode ;
- au moins un polymère destiné à entrer dans la constitution de la matrice polymérique ;
- un électrolyte ;
- éventuellement au moins un additif conducteur électronique.

Le matériau actif d'électrode est un matériau apte à insérer et désinsérer, dans sa structure, des ions métalliques, tels que des ions alcalins (par exemple, des ions lithium, lorsque l'accumulateur est un accumulateur au lithium, des ions sodium, lorsque l'accumulateur est un accumulateur au sodium, ou des ions potassium, lorsque l'accumulateur est un accumulateur au potassium), des ions alcalino-terreux (par exemple, des ions magnésium, lorsque l'accumulateur est un accumulateur au magnésium, des ions calcium, lorsque l'accumulateur est un accumulateur au calcium), des ions métalliques (par exemple, des ions aluminium, lorsque l'accumulateur est un accumulateur aluminium-ion).

La nature du matériau actif est fonction bien entendu de sa destination, à savoir s'il est destiné à une électrode positive ou une électrode négative.

Aussi, lorsque le procédé de l'invention est destiné à la fabrication d'une électrode positive, à titre d'exemples de matériaux actifs d'électrode susceptibles d'entrer dans la constitution d'une électrode positive d'un accumulateur au lithium, il peut être fait mention :

- des chalcogénures métalliques de formule $LiMQ_2$, dans laquelle M est au moins un élément métallique choisi parmi les éléments métalliques, tels que Co, Ni, Fe, Mn, Cr, V, Al et Q est un chalcogène, tel que O ou S, les chalcogénures métalliques préférés étant ceux de formule $LiMO_2$, avec M étant tel défini ci-dessus, tel que, de manière préférée, LiCoOz, LiNiOz, $LiNi_xCo_{1-x}O_2$ (avec 0<x<1), un matériau à base de lithium-nickel-manganèse-cobalt $LiNi_xMn_yCo_zO_2$ avec x+y+z=1 (connu également sous l'abréviation NMC), tel que $LiNi_{0,33}Mn_{0,33}Co_{0,33}O_2$, ou un matériau à base de lithium-nickel-cobalt-aluminium $LiNi_xCo_yAl_zO_2$ avec x+y+z = 1 (connu également sous l'abréviation NCA), tel que $LiNi_{0,8}Co_{0,15}Al_{0,05}O_2$ ;
- des chalcogénures de structure spinelle, tels que $LiMn_2O_4$ ;
- des matériaux lithiés ou partiellement lithiés de formule $M_1M_2(JO_4)_fE_{1-f}$, dans laquelle $M_1$ est du lithium, qui est peut être partiellement substitué par un autre élément alcalin à hauteur d'un taux de substitution de moins de 20%, $M_2$ est un élément métallique de transition de degré d'oxydation +2 choisi parmi Fe, Mn, Ni et les combinaisons de ceux-ci, qui peut être partiellement substitué par un ou plusieurs autres éléments métalliques additionnels de degré(s) d'oxydation(s) entre +1 et +5 à hauteur d'un taux de substitution de moins de 35%, $JO_4$ est un oxyanion dans lequel J est choisi parmi P, S, V, Si, Nb, Mo et les combinaisons de ceux-ci, E est un anion fluorure, hydroxyde ou chlorure, f est la fraction molaire de l'oxyanion $JO_4$ et est compris, généralement, entre 0,75 et 1 (incluant 0,75 et 1).

Plus spécifiquement, les matériaux lithiés ou partiellement lithiés peuvent être à base de phosphore (ce qui signifie, en d'autres termes, que l'oxyanion ré-

pond à la formule $PO_4$) et peuvent présenter une structure du type olivine ordonnée ou modifiée.

Les matériaux lithiés ou partiellement lithiés peuvent répondre à la formule spécifique $Li_{3-x}M'_yM''_{2-y}(JO_4)_3$, dans laquelle $0 \leq x \leq 3$, $0 \leq y \leq 2$, M' et M" représentent des éléments métalliques identiques ou différents, l'un au moins des M' et M" étant un élément métallique de transition, $JO_4$ est, de préférence, $PO_4$, qui peut être partiellement substitué par un autre oxyanion avec J étant choisi parmi S, V, Si, Nb, Mo et les combinaisons de ceux-ci.

Les matériaux lithiés ou partiellement lithiés peuvent répondre à la formule $Li(Fe_xMn_{1-x})PO_4$, dans laquelle $0 \leq x \leq 1$ et, de préférence, x est égal à 1 (ce qui signifie, en d'autres termes, que le matériau correspondant est $LiFePO_4$).

Lorsque le procédé de l'invention est destiné à la fabrication d'une électrode négative, à titre d'exemples de matériaux actifs d'électrode susceptibles d'entrer dans la constitution d'une électrode négative d'un accumulateur au lithium, il peut être fait mention :

- des matériaux carbonés, tels que du carbone graphitique apte à intercaler du lithium pouvant exister, typiquement, sous forme d'une poudre, de paillettes, de fibres ou de sphères (par exemple, des microbilles de mésocarbone) ;
- des composés à base de silicium, tel qu'un carbure de silicium SiC ou un oxyde de silicium $SiO_x$;
- du lithium métallique ;
- des alliages de lithium, tels que ceux décrits dans US 6203944 et/ou WO 00/03444 ;
- des oxydes de titane lithiés, tel qu'un oxyde de formule $Li_{(4-x)}M_xTi_sO_{12}$ ou $Li_4M_yTi_{(5-y)}O_{12}$ dans laquelle x et y vont de 0 à 0,2, M représente un élément choisi parmi Na, K, Mg, Nb, Al, Ni, Co, Zr, Cr, Mn, Fe, Cu, Zn, Si et Mo, un exemple spécifique étant $Li_4Ti_5O_{12}$, ces oxydes étant des matériaux d'insertion du lithium présentant un faible niveau d'expansion physique après avoir inséré du lithium ;
- des oxydes de titane non lithiés, tel que TiOz;
- des oxydes de formule $M_yTi_{(5-y)}O_{12}$ dans laquelle y va de 0 à 0,2 et M est un élément choisi parmi Na, K, Mg, Nb, Al, Ni, Co, Zr, Cr, Mn, Fe, Cu, Zn, Si et Mo ;
- des alliages lithium-germanium, tels que ceux comprenant des phases cristallines de formule $Li_{4,4}Ge$ ; ou
- d'un mélange de ceux-ci, tel qu'un mélange comprenant du graphite et un composé à base de silicium.

Le ou les polymères aptes à entrer dans la constitution de la matrice polymérique sont, avantageusement, choisis parmi les polymères gélifiants aptes à gélifier au contact de l'électrolyte et piéger ainsi l'électrolyte (l'électrode résultant formant ainsi une électrode communément appelé « électrode ionogel ») et, plus spécifiquement, peuvent être choisi(s) parmi des polymères fluorés comprenant au moins une unité répétitive issue de la polymérisation d'un monomère fluoré et, de préférence, au moins une unité répétitive issue de la polymérisation d'un monomère comprenant au moins un groupe acide carboxylique , éventuellement sous forme d'un sel.

Il s'entend que la ou les unités répétitives issues de la polymérisation d'un monomère fluoré et, le cas échéant, la ou les unités répétitives issues de la polymérisation d'un monomère comprenant au moins un groupe acide carboxylique, éventuellement sous forme d'un sel, sont des unités répétitives chimiquement différentes et, en particulier, le ou les unités répétitives issues de la polymérisation d'un monomère fluoré ne comprennent pas de groupe(s) acide carboxylique, éventuellement sous forme d'un sel.

Pour les polymères gélifiants, la ou les unités répétitives issues de la polymérisation d'un monomère fluoré peuvent être, plus spécifiquement, une ou des unités répétitives issues de la polymérisation d'un ou plusieurs monomères éthyléniques comprenant au moins un atome de fluor et éventuellement un ou plusieurs autres atomes d'halogène des exemples de monomères de ce type étant les suivants :

- des perfluorooléfines en $C_2$-$C_8$, telles que le tétrafluoroéthylène, l'hexafluoropropène (connu également sous l'abréviation HFP) ;
- des fluorooléfines hydrogénées en $C_2$-$C_8$, telles que le fluorure de vinylidène, le fluorure de vinyle, le 1,2-difluoroéthylène et le trifluoroéthylène ;
- des perfluoroalkyléthylènes de formule $CH_2=CHR^1$, dans laquelle $R^1$ est un groupe perfluoroalkyle en $C_1$-$C_6$;
- des fluorooléfines en $C_2$-$C_6$ comportant un ou plusieurs autres atomes d'halogène (tels que du chlore, du brome, de l'iode), telles que du chlorotrifluoroéthylène ;
- des (per)fluoroalkylvinyléthers de formule $CF_2=CFOR^2$, dans laquelle $R^2$ est un groupe fluoro- ou perfluoroalkyle en $C_1$-$C_6$, tel que $CF_3$, $C_2F_5$, $C_3F_7$;
- des monomères de formule $CF_2=CFOR^3$, dans laquelle $R^3$ est un groupe alkyle en $C_1$-$C_{12}$, un groupe alcoxy en $C_1$-$C_{12}$ ou un groupe (per)fluoroalcoxy en $C_1$-$C_{12}$, tel qu'un groupe perfluoro-2-propoxypropyle ; et/ou
- des monomères de formule $CF_2=CFOCF_2OR^4$, dans laquelle $R^4$ est un groupe fluoro- ou perfluoroalkyle en $C_1$-$C_6$, tel que $CF_2$, $C_2F_5$, $C_3F_7$ ou un groupe fluoro- ou perfluoroalcoxy en Ci-Ce, tel que $-C_2F_5-O-CF_3$.

Plus particulièrement, le ou les polymères gélifiants peuvent comprendre, comme unité(s) répétitive(s) issue(s) de la polymérisation d'un monomère fluoré, une unité répétitive issue de la polymérisation d'un monomère de la catégorie des perfluorooléfines en $C_2$-$C_8$, telles que l'hexafluoropropène et une unité répétitive issue de la polymérisation d'un monomère de la catégorie des fluorooléfines hydrogénées en $C_2$-$C_8$, tel-

les que le fluorure de vinylidène.

Le ou les unités répétitives issues de la polymérisation d'un monomère comprenant au moins un groupe acide carboxylique, éventuellement sous forme d'un sel peuvent être, plus spécifiquement, une ou des unités répétitives issues de la polymérisation d'un monomère de formule (I) suivante :

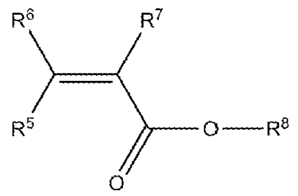

(I)

dans laquelle $R^5$ à $R^7$ représentent, indépendamment l'un de l'autre, un atome d'hydrogène ou un groupe alkyle en $C_1$-$C_3$ et $R^8$ représente un atome d'hydrogène ou un cation monovalent (par exemple, un cation alcalin, un cation ammonium), des exemples particuliers de monomères de ce type étant l'acide acrylique ou l'acide méthacrylique.

Des polymères gélifiants particuliers utilisables dans le cadre de l'invention peuvent être des polymères comprenant une unité répétitive issue de la polymérisation du fluorure de vinylidène, une unité répétitive issue de la polymérisation d'un monomère comprenant au moins un groupe acide carboxylique, tel que l'acide acrylique et éventuellement une unité répétitive issue de la polymérisation d'un monomère fluoré différent du fluorure de vinylidène (et plus spécifiquement, une unité répétitive issue de la polymérisation de l'hexafluoropropène).

Plus particulièrement encore, des polymères gélifiants utilisables dans le cadre de l'invention sont des polymères gélifiants, dont les unités répétitives susmentionnées sont issues de la polymérisation :

- d'au moins 70% en moles d'une fluorooléfine hydrogénée en $C_2$-$C_8$, de préférence, le fluorure de vinylidène ;
- de 0,1 à 15% en moles d'une perfluorooléfine en $C_2$-$C_8$, de préférence, l'hexafluoropropène ; et
- de 0,01 à 20% en moles d'un monomère de formule (I) susmentionnée, de préférence, l'acide acrylique.

Par ailleurs, le ou les polymères gélifiants présentent, avantageusement, une viscosité intrinsèque mesurée à 25°C dans le N,N-diméthylformamide allant de 0,1 à 1,0 L/g, de préférence, de 0,25 à 0,45 L/g.

Plus spécifiquement, la viscosité intrinsèque est déterminée par l'équation ci-dessous basée sur la durée de chute, à 25°C, d'une solution obtenue par dissolution du polymère concerné dans un solvant (le N,N-diméthylformamide) à une concentration d'environ 0,2 g/dL en utilisant un viscosimètre Ubbelhode :

$$[\eta] = \frac{\eta_{sp} + \Gamma.\ln \eta_r}{(1+\Gamma).c}$$

dans laquelle :

- $\eta$ correspond à la viscosité intrinsèque (en dL/g) ;
- c correspond à la concentration en polymère (en g/dL) ;
- $\eta_r$ correspond à la viscosité relative, c'est-à-dire le rapport entre la durée de chute de la solution et la durée de chute du solvant ;
- $\eta_{sp}$ correspond à la viscosité spécifique, c'est-à-dire $\eta_r$ - 1 ;
- $\Gamma$ correspond à un facteur expérimental fixé à 3 pour le polymère concerné.

L'électrolyte est, avantageusement, un électrolyte liquide et, plus spécifiquement un électrolyte liquide, qui peut gélifier au contact de la matrice polymérique, lorsque celle-ci comprend un ou plusieurs polymères gélifiants.

L'électrolyte liquide peut comprendre (voire est constitué de) au moins un solvant organique, au moins un sel métallique et éventuellement un additif appartenant à la catégorie des composés carbonatés (étant entendu que cet additif est différent du ou des solvants carbonates compris, le cas échéant, dans l'électrolyte).

Le ou les solvants organiques peuvent être des solvants carbonates et, plus spécifiquement :

- des solvants carbonates cycliques, tel que le carbonate d'éthylène (symbolisé par l'abréviation EC), le carbone de propylène (symbolisé par l'abréviation PC), le carbonate de butylène, le carbonate de vinylène, le carbonate de fluoroéthylène, le carbonate de fluoropropylène et les mélanges de ceux-ci ;
- des solvants carbonates linéaires, tels que le carbonate de diéthyle (symbolisé par l'abréviation DEC), le carbonate de diméthyle (symbolisé par l'abréviation DMC), le carbonate d'éthylméthyle (symbolisé par l'abréviation EMC) et les mélanges de ceux-ci.

Le ou les solvants organiques peuvent être également des solvants esters (tels que le propionate d'éthyle, le propionate de n-propyle), des solvants nitriles (tels que l'acétonitrile) ou des solvants éthers (tels que le diméthyléther, le 1,2-diméthoxyéthane).

Le ou les solvants organiques peuvent être également des liquides ioniques, c'est-à-dire, classiquement, des composés formés par la combinaison d'un cation chargé positivement et d'un anion chargé négativement, qui est à l'état liquide à des températures inférieures à 100°C sous pression atmosphérique.

Plus spécifiquement, les liquides ioniques peuvent comprendre :

- un cation choisi parmi les cations imidazolium, pyridinium, pyrrolidinium, pipéridinium, ammonium quaternaire, phosphonium quaternaire, pyrazolium, lesdits cations étant éventuellement substitués, par exemple, par au moins un groupe alkyle comprenant de 1 à 30 atomes de carbone ;
- un anion choisi parmi les anions halogénures, les anions perfluorés, les anions borates.

Encore plus spécifiquement, le cation peut être choisi parmi les cations suivants :

- un cation pyrrolidinium de formule (II) suivante :

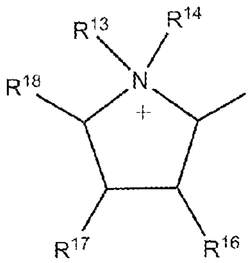

(II)

dans laquelle $R^{13}$ et $R^{14}$ représentent, indépendamment l'un de l'autre, un groupe alkyle en $C_1$-$C_8$ et $R^{15}$, $R^{16}$, $R^{17}$ et $R^{18}$ représentent, indépendamment l'un de l'autre, un atome d'hydrogène ou un groupe alkyle en $C_1$-$C_{30}$, de préférence, un groupe alkyle en $C_1$-$C_{18}$, de préférence encore, un groupe alkyle en $C_1$-$C_8$;
- un cation pipéridinium de formule (III) suivante :

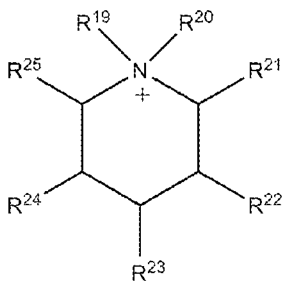

(III)

dans laquelle $R^{19}$ et $R^{20}$ représentent, indépendamment l'un de l'autre, un groupe alkyle en $C_1$-$C_8$ et $R^{21}$, $R^{22}$, $R^{23}$, $R^{24}$ et $R^{25}$ représentent, indépendamment l'un de l'autre, un atome d'hydrogène ou un groupe alkyle en $C_1$-$C_{30}$, de préférence, un groupe alkyle en $C_1$-$C_{18}$, de préférence encore, un groupe alkyle en $C_1$-$C_8$;
- un cation ammonium quaternaire ;
- un cation phosphonium quaternaire ;
- un cation imidazolium ; et
- un cation pyrazolium.

En particulier, le cation chargé positivement peut être choisi parmi les cations suivants :

- un cation pyrrolidinium de formule (II-A) suivante :

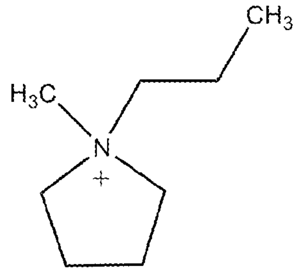

(II-A)

- un cation pipéridinium de formule (III-A) suivante :

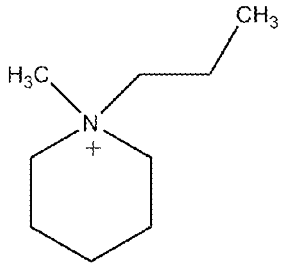

(III-A)

Quand il s'agit d'un cation ammonium quaternaire, celui-ci peut correspondre à un cation tétraalkylammonium, un cation trialkylarylammonium ou un cation tétraarylammonium, les groupes alkyles, lorsqu'ils sont présents, étant identiques ou différents et pouvant correspondre à des groupes alkyles, linéaires ou ramifiés, comprenant de 4 à 12 atomes de carbone, de préférence, de 4 à 6 atomes de carbone et les groupes aryles, lorsqu'ils sont présents, étant identiques ou différents et pouvant correspondre à un groupe phényle, un groupe benzyle ou un groupe naphtyle. Plus spécifiquement, il peut s'agir d'un cation tétraéthylammonium, un cation tétrapropylammonium, un cation tétrabutylammonium, un cation triméthylbenzylammonium, un cation méthyltributylammonium, un cation N,N-diéthyl-N-méthyl-N-(2-méthoxyéthyl)ammonium, un cation N,N-diméthyl-N-éthyl-N-(3-méthoxypropyl)ammonium, un cation N,N-diméthyl-N-éthyl-N-benzylammonium, un cation N,N-diméthyl-N-éthyl-N-phényléthyl-ammonium, un cation N-tributyl-N-méthylammonium, un cation N-triméthyl-N-butylammonium, un cation N-triméthyl-N-hexylammonium, un cation N-triméthyl-N-propylammonium.

Quand il s'agit d'un cation phosphonium quaternaire, celui-ci peut correspondre à un cation tétraalkylphosphonium, un cation trialkylarylphosphonium ou un cation tétraarylammonium, les groupes alkyles, lorsqu'ils sont présents, étant identiques ou différents et pouvant correspondre à des groupes alkyles, linéaires ou ramifiés, comprenant de 4 à 12 atomes de carbone, de préférence, de 4 à 6 atomes de carbone et les groupes aryles, lorsqu'ils sont présents, étant identiques ou différents et pouvant correspondre à un groupe phényle, un groupe benzyle ou un groupe naphtyle. Plus spécifiquement, il peut s'agir d'un cation trihexyl(tétradécyl)phosphonium, un cation tétrabutylphosphonium.

Quand il s'agit d'un cation imidazolium, il peut correspondre à un cation 1,3-diméthylimidazolium, un cation 1-(4-sulfobutyl)-3-méthylimidazolium, un cation 1-allyl-3H-imidazolium, un cation 1-butyl-3-méthylimidazolium, un cation 1-éthyl-3-méthylimidazolium, un cation 1-hexyl-3-méthylimidazolium, un cation 1-octyl-3-méthylimidazolium.

De manière spécifique, l'anion chargé négativement peut être choisi parmi :

- le 4,5-dicyano-2-(trifluorométhyl)imidazole (connu sous l'abréviation TDI) ;
- le bis(fluorosulfonyl)imidure (connu sous l'abréviation FSI) ;
- le bis(trifluorométhylsulfonyl)imidure de formule $(SO_2CF_3)_2N^-$;
- l'hexafluorophosphate de formule $PF_6^-$;
- le tétrafluoroborate de formule $BF_4^-$;
- l'oxaloborate de formule (IV) suivante :

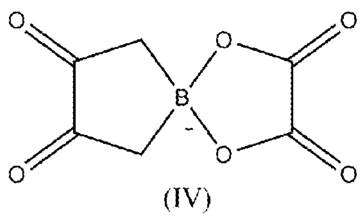

(IV)

Un liquide ionique spécifique et utilisable selon l'invention peut être un liquide ionique composé d'un cation de formule (II-A) telle que définie ci-dessus et un anion de formule $(SO_2CF_3)_2N^-$, $PF_6^-$ ou $BF_4^-$.

Le ou les sels métalliques peuvent être choisis parmi les sels de formules suivantes : MeI, $Me(PF_6)_n$, $Me(BF_4)n$, $Me(ClO_4)_n$, $Me(bis(oxalato)borate)_n$ (pouvant être désigné par l'abréviation $Me(BOB)_n$), $MeCF_3SO_3$, $Me[N(FSO_2)_2]_n$, $Me[N(CF_3SO_2)_2]_n$, $Me[N(C_2F_5SO_2)_2]_n$, $Me[N(CF_3SO_2)(R_FSO_2)]_n$, dans laquelle $R_F$ est un groupe $-C_2F_5$, $-C_4F_9$ ou $-CF_3OCF_2CF_3$, $Me(AsF_6)_n$, $Me[C(CF_3SO_2)_3]_n$, $Me_2S_n$, $Me(C_6F_3N_4)$ ($C_6F_3N_4$ correspondant à du 4,5-dicyano-2-(trifluorométhyl)imidazole et, lorsque Me est Li, le sel correspond à du 4,5-dicyano-2-(trifluorométhyl)imidazole de lithium, ce sel étant connus sous l'abréviation LiTDI), dans lesquelles Me est un élément métallique et, de préférence, un élément de transition métallique, un élément alcalin ou un élément alcalino-terreux et, de préférence encore, Me est Li (notamment, lorsque l'accumulateur de l'invention est un accumulateur lithium-ion ou lithium-air), Na (notamment, lorsque l'accumulateur est un accumulateur sodium-ion), K (notamment, lorsque l'accumulateur est un accumulateur potassium-ion), Mg (notamment, lorsque l'accumulateur est un accumulateur Mg-ion), Ca (notamment, lorsque l'accumulateur est un accumulateur calcium-ion) et Al (notamment, lorsque l'accumulateur est un accumulateur aluminium-ion) et n correspond au degré de valence de l'élément métallique (typiquement, 1, 2 ou 3).

Lorsque Me est Li, le sel est, de préférence, $LiPF_6$.

La concentration du sel métallique dans l'électrolyte liquide est, avantageusement, d'au moins 0,01 M, de préférence d'au moins 0,025 M et, de préférence encore, d'au moins 0,05 M et, avantageusement, d'au plus 5 M, de préférence, d'au plus 2 M et, de préférence encore, d'au plus, 1M.

En outre, l'électrolyte liquide peut comprendre au moins un additif appartenant à la catégorie des composés carbonatés (étant entendu que cet additif est différent du ou des solvants carbonates compris, le cas échéant, dans l'électrolyte), tel que du carbonate de vinylène ou du carbonate de fluoroéthylène, cet additif étant compris dans l'électrolyte à une teneur ne dépassant pas 5% massique de la masse totale de l'électrolyte.

Un électrolyte liquide pouvant être utilisé, notamment lorsque l'électrode fabriquée selon le procédé de l'invention est destinée à un accumulateur lithium-ion, est un électrolyte comprenant un mélange de solvants carbonates (par exemple, un mélange de solvants carbonates cycliques, tel qu'un mélange de carbonate d'éthylène et de carbonate de propylène ou un mélange de solvants carbonates cycliques et de solvant(s) carbonate(s) linéaire(s), tel qu'un mélange de carbonate d'éthylène, de carbonate de propylène et de carbonate de diméthyle), un sel de lithium, par exemple, $LiPF_6$ (par exemple, 1M) et éventuellement un additif, tel que du carbonate de vinylène, du carbonate de fluoroéthylène.

Comme mentionné ci-dessus, la composition peut contenir au moins un additif conducteur électronique, c'est-à-dire un additif susceptible de conférer à l'électrode, dans laquelle il est incorporé, une conductivité électronique, cet additif pouvant être, par exemple, choisi parmi des matériaux carbonés tels que le noir de carbone, les nanotubes de carbone, les fibres de carbone (en particulier, les fibres de carbone obtenues en phase vapeur connues sous l'abréviation VGCF), du graphite sous forme de poudre, les fibres de graphite, du graphène et les mélanges de ceux-ci.

En outre, la composition peut comprendre au moins un solvant (hormis, le cas échéant, le ou les éventuels solvants organiques de l'électrolyte) du ou des polymères destinés à entrer dans la constitution de la matrice polymérique, ce solvant pouvant être un solvant de la famille des cétones (telles que l'acétone), lorsque le ou les polymères sont choisis dans la famille des polymères fluorés comprenant au moins une unité répétitive issue de la polymérisation d'un monomère fluoré et, de préférence, au moins une unité répétitive issue de la polymérisation d'un monomère comprenant au moins un groupe acide carboxylique, éventuellement sous forme

d'un sel. Grâce à l'utilisation du mélangeur spécifique, ce ou ces solvant(s) peuvent être utilisés en quantité moindre par rapport à un procédé impliquant l'utilisation d'un mélangeur traditionnel.

Dans le cas où la composition comprend au moins un solvant tel que mentionné ci-dessus, le procédé comprend, avantageusement, après l'étape de formation, une étape d'évaporation, par exemple, sélective, du ou des solvants du ou des polymères destinés à entrer dans la constitution de la matrice polymérique, par exemple, par un séchage en ligne par évaporation sélective.

L'étape de préparation est réalisée à une température inférieure à 100°C, de préférence, à une température inférieure à 80°C et, encore plus préférablement, à une température inférieure à 70°C et, de préférence, à une température supérieure ou égale à 5°C, de préférence encore, supérieure ou égale à 10°C, et encore plus préférablement, supérieure ou égale à 15°C.

Plus spécifiquement, l'étape de préparation peut être réalisée à température ambiante (c'est-à-dire la température de l'environnement, dans lequel se déroule l'étape de préparation, sans apport de chaleur par un quelconque élément de chauffage, par exemple, une température allant de 15 à 35°C, et plus spécifiquement, une température égale à 25°C) ou peut être réalisée à une température supérieure à la température ambiante, par exemple, une température supérieure à la température ambiante mais inférieure à 100°C . Plus spécifiquement, l'étape de préparation peut être réalisée à une température supérieure à la température ambiante mais inférieure à la température d'ébullition du ou des solvants du ou des polymères destinés à entrer dans la constitution de la matrice polymérique, lorsque ce ou ces solvants sont présents dans la composition ou lorsque ce ou ces solvants ne sont pas présents, à une température supérieure à la température ambiante mais inférieure à la température de fusion du ou des polymères destinés à entrer dans la constitution de la matrice polymérique (étant entendu que la température, à laquelle est réalisée l'étape de préparation, est toujours inférieure à 100°C).

L'étape de préparation permet d'obtenir une composition sous forme de pâte homogène et présentant une viscosité dynamique très importante, et plus spécifiquement, une viscosité dynamique supérieure à 5000 Pa.s, de préférence supérieure à 6000 Pa.s et, de préférence encore supérieure à 7000 Pa.s, mesurée à un gradient de cisaillement de 0,1 $s^{-1}$ et à température ambiante.

On précise que, par température ambiante, il s'entend la température de l'environnement, dans lequel se déroule la mesure de viscosité dynamique, sans apport de chaleur par un quelconque élément de chauffage, par exemple, une température allant de 15 à 35°C, telle que, par exemple, une température égale à 25°C.

Plus spécifiquement, la viscosité dynamique de la composition est mesurée avec un rhéomètre Bohlin CVO de la marque Malvern équipé d'un support Peltier et d'un mobile cône-plan de diamètre 40 mm et d'angle 4°. Pour ce faire, la composition est déposée entre le support Peltier et le mobile à un entrefer de 150 $\mu$m. Le cas échéant, lorsque la composition comprend au moins un solvant du ou des polymères constitutifs de la matrice polymérique, une trappe à solvant(s) est ajoutée au système pour éviter l'évaporation trop rapide du ou des solvants. La mesure est réalisée en mode viscosimétrie à un gradient de cisaillement de 0,1 $s^{-1}$ et à température ambiante sur un temps d'intégration de 5 secondes.

Par ailleurs, la composition sous forme de pâte présente, en général, une viscosité dynamique ne dépassant pas 20000 Pa.s, de préférence, ne dépassant pas 18000 Pa.s, dans les conditions telles que définies ci-dessus (à savoir, à un gradient de cisaillement de 0,1 $s^{-1}$ et à température ambiante). Des résultats très avantageux ont été obtenus, lorsque la composition se présente sous forme de pâte ayant une viscosité dynamique allant de 7000 à 12000 Pa.s dans les conditions définies ci-dessus (à savoir, à un gradient de cisaillement de 0,1 $s^{-1}$ et à température ambiante).

Un aspect particulièrement avantageux du procédé de l'invention réside, en effet, dans sa capacité à permettre la préparation d'une composition de formation d'électrode ayant une viscosité dynamique très élevée, ce qui permet de minimiser l'utilisation d'électrolyte liquide et/ou de solvants organiques. Ceci est un avantage par rapport aux techniques bien établies de fabrication d'électrodes à partir d'encres fabriquées à partir de mélangeurs traditionnels du type disperseur ou mélangeur planétaire, qui présentent une viscosité dynamique inférieure à 5000 Pa.s, voire même inférieure à 1000 Pa.s mesurée dans les conditions mentionnées ci-dessus.

Lorsque les compositions comprennent au moins un solvant du ou des polymères destinés à entrer dans la constitution de la matrice polymérique, ces compositions peuvent comprendre, à l'issue de l'étape de préparation, de 50 à 80% de masse solide par rapport à la masse totale de la composition.

Plus spécifiquement, lorsque les compositions comprennent, comme ingrédients constitutifs, au moins un matériau actif d'électrode, au moins un polymère destiné à entrer dans la constitution de la matrice polymérique, un électrolyte et éventuellement au moins un additif conducteur électronique et au moins un solvant du ou des polymères, les compositions obtenues à l'issue de cette étape de préparation présentent, avantageusement, un pourcentage de masse solide par rapport à la masse totale de la composition pouvant aller de 50 à 80 % (contre 35 à 49 % avec des procédés impliquant des mélangeurs traditionnels). Par ailleurs, ces compositions peuvent comprendre une masse d'électrolyte à hauteur de 6 à 11% de la masse totale de la composition et une masse du ou des solvants du ou des polymères à hauteur de 11 à 42% de la masse totale de la composition (contre 45 à 57 % avec des procédés impliquant des mélangeurs traditionnels).

Selon un mode particulier et avantageusement de réalisation, la composition peut être dénuée de solvant(s) du ou des polymères destinés à entrer dans la constitution de la matrice polymérique. Dans ces conditions, les compositions peuvent comprendre, à l'issue de l'étape de préparation, de 83 à 90% de masse solide par rapport à la masse totale de la composition.

Plus spécifiquement, lorsque les compositions comprennent, comme ingrédients constitutifs, au moins un matériau actif d'électrode, au moins un polymère destiné à entrer dans la constitution de la matrice polymérique, un électrolyte et éventuellement au moins un additif conducteur électronique mais sont dénuées de solvant(s) du ou des polymères, le pourcentage de masse solide peut représenter de 83 à 90 % de la masse totale de la composition et la masse d'électrolyte peut représenter de 10 et 17 % de la masse totale de la composition.

Dans ces conditions, l'étape d'évaporation du solvant mentionnée plus haut n'est pas nécessaire.

L'étape de préparation peut être réalisée de manière continue, c'est-à-dire que l'introduction des ingrédients et le mélange de ceux-ci dans le mélangeur spécifique s'effectue de manière continue, c'est-à-dire pendant toute la durée de sa mise en oeuvre du procédé.

L'étape de formation de l'électrode à partir de la composition peut être effectuée par dépôt *via* une filière, par exemple, une filière plate, ladite composition étant acheminée, sur le support, *via* une filière ayant pour vocation l'écoulement de la composition d'une géométrie circulaire vers une géométrie rectangulaire, de sorte à former sur le support une bande.

Préalablement, la composition peut être éventuellement laminée avant d'accéder au support, de sorte à réduire son épaisseur, la composition ainsi laminée pouvant être déposée sur le support *via* une opération de colaminage avec le support.

Avant l'étape de formation et après l'étape de fabrication, la composition peut transiter dans un autre mélangeur, par exemple, un dispositif d'acheminement sous pression, tel qu'un convoyeur à monovis tournant dans un fourreau fermé et supportant de plus hautes pressions que le mélangeur utilisé lors de l'étape de fabrication, l'étape de formation dans ce cas pouvant être effectuée également *via* une filière disposée, de préférence, à la sortie de l'autre mélangeur, cette filière ayant, également, pour vocation l'écoulement de la composition d'une géométrie circulaire vers une géométrie rectangulaire, de sorte à former sur le support une bande.

Avant l'introduction dans l'autre mélangeur, tel qu'un convoyeur monovis, la composition peut se présenter sous forme de granulés, ces granulés étant formés à la sortie du mélangeur bivis utilisé pour l'étape de fabrication, au moyen, par exemple, d'une filière arrondie disposée à la sortie du mélangeur, de sorte à former un jonc, cette filière étant dotée d'un système de découpe disposé à la sortie du mélangeur bivis.

Après l'étape de formation de l'électrode et l'éventuelle étape d'évaporation, le procédé peut comprendre, en outre, une étape de calandrage de l'électrode, de sorte à augmenter la densité d'énergie volumique.

Le procédé de fabrication peut être un procédé continu, c'est-à-dire un procédé qui se déroule sans interruption pendant toute la durée de sa mise en oeuvre, ce qui signifie, en d'autres termes, que l'électrode est fabriquée sans interruption pendant toute la durée de mise en oeuvre du procédé. Autrement dit, cela signifie que l'étape a) et l'étape b) sont mises en oeuvre concomitamment et sans interruption pendant toute la durée du procédé, ce qui signifie, en d'autres termes, qu'à chaque instant t de la durée du procédé, une fraction de la composition est soumise à l'étape de fabrication tandis qu'une autre fraction de la composition est soumise à l'étape de formation. Il s'entend également, dans ce cas, que toutes les étapes facultatives du procédé (par exemple, l'étape de laminage, l'étape de séchage) sont, lorsqu'elles sont présentes, mises en oeuvre de façon continue.

L'invention va maintenant être décrite à la lumière des exemples donnés ci-dessous donnés à titre illustratif et non limitatif.

## BREVE DESCRIPTION DES FIGURES

La figure 1 est un graphique illustrant l'évolution de la tension U (en V) en fonction de la capacité C (en mAh/g) pour l'électrode négative obtenue selon le procédé de l'exemple 1, la courbe a) étant celle du 1$^{er}$ cycle et la courbe b) étant celle du 2$^{nd}$ cycle.

La figure 2 est un graphique illustrant l'évolution de la tension U (en V) en fonction de la capacité C (en mAh/g) pour l'électrode positive obtenue selon le procédé de l'exemple 3, la courbe a) étant celle du 1$^{er}$ cycle et la courbe b) étant celle du 2$^{nd}$ cycle.

La figure 3, déjà décrite, est une vue en coupe d'un mélangeur bivis spécifique utilisable dans le cadre du procédé de l'invention.

## EXPOSÉ DÉTAILLÉ DE MODES DE RÉALISATION PARTICULIERS

EXEMPLE 1

Cet exemple illustre la fabrication par un procédé continu conforme à l'invention d'une électrode négative comprenant 55 % de masse solide par rapport à la masse totale de l'électrode.

Dans un premier temps, il est préparé une pâte d'électrode ionogel par introduction et malaxage en continu à 25°C des constituants de l'électrode en présence d'acétone dans un mélangeur à deux vis interpénétrantes co-rotatives tournant dans un fourreau fermé, l'introduction étant réalisée, en premier lieu, par l'introduction des constituants solides puis, en deuxième lieu, par l'introduction des constituants liquides. La composition de la pâte est la suivante : 39,2% massique de graphite ($D_{50}$=20$\mu$m), 13,1% massique de graphite ($D_{50}$=3,5$\mu$m),

2,7% massique du copolymère constitutif de la matrice polymérique (lequel copolymère est un copolymère comprenant des unités répétitives issues de la polymérisation du fluorure de vinylidène (96,7% en moles), d'acide acrylique (0,9% en moles) et d'hexafluoropropène (2,4 % en moles) et présentant une viscosité intrinsèque de 0,30 L/g dans du diméthylformamide à 25°C), 37,5% massique d'acétone anhydre et 7,5% massique d'électrolyte à 1M de $LiPF_6$ dans un mélange de carbonate d'éthylène et de carbonate de propylène (1:1) contenant 2% massique de carbonate de vinylène.

La viscosité dynamique de la composition a été mesurée sur un rhéomètre Bohlin CVO de la marque Malvern équipé d'un support Peltier et d'un mobile cône-plan de diamètre 40 mm et d'angle 4°. Pour ce faire, la pâte est déposée entre le support Peltier et le mobile à un entrefer de 150 $\mu$m, une trappe à solvant est ajoutée au système pour éviter l'évaporation trop rapide de l'acétone et la mesure est réalisée en mode viscosimétrie à un gradient de cisaillement de 0,1 $s^{-1}$ et 25°C sur un temps d'intégration de 5 secondes.

La valeur de viscosité dynamique obtenue est de 7200 Pa.s.

Dans un deuxième temps, la pâte d'électrode ainsi formée est enduite, à la sortie du mélangeur spécifique sur un feuillard en cuivre d'épaisseur 10 $\mu$m, puis séchée et calandrée, formant ainsi une électrode graphite ionogel. Le grammage de l'électrode est de 11,3 mg/cm$^2$ (3,6 mAh/cm$^2$) pour une épaisseur de 90 $\mu$m. La capacité de l'électrode a été vérifiée en pile bouton face au lithium métal.

La capacité totale mesurée est de 350 mAh/g et la capacité réversible est de 300 mAh/g lors du 1$^{er}$ cycle à C/20. La capacité réversible est de 350 mAh/g lors du 2$^{nd}$ cycle à C/20, ces données étant illustrées sur la figure 1, illustrant l'évolution de la tension U (en V) en fonction de la capacité C (en mAh/g), la courbe a) étant celle du 1$^{er}$ cycle et la courbe b) étant celle du 2$^{nd}$ cycle.

EXEMPLE 2

Cet exemple illustre la fabrication d'une pâte d'électrode ionogel, ladite pâte étant préparée conformément à l'étape de fabrication du procédé de l'invention et comprenant 65% de masse solide par rapport à la masse totale de l'électrode.

Cette pâte d'électrode est préparée par introduction et malaxage en continu à 25°C des constituants de l'électrode en présence d'acétone dans un mélangeur à deux vis interpénétrantes co-rotatives tournant dans un fourreau fermé, l'introduction étant réalisée, en premier lieu, par l'introduction des constituants solides puis, en deuxième lieu, par l'introduction des constituants liquides. La composition de la pâte est la suivante : 46,4% massique de graphite ($D_{50}$=20$\mu$m), 15,4% massique de graphite ($D_{50}$=3,5$\mu$m), 3,2% massique du copolymère constitutif de la matrice polymérique (lequel copolymère est un copolymère comprenant des unités répétitives issues de la polymérisation du fluorure de vinylidène (96,7% en moles), d'acide acrylique (0,9% en moles) et d'hexafluoropropène (2,4 % en moles) et présentant une viscosité intrinsèque de 0,30 L/g dans du diméthylformamide à 25°C), 24,2% massique d'acétone anhydre et 10,8% massique d'électrolyte à 1M de $LiPF_6$ dans un mélange de carbonate d'éthylène, de carbonate de propylène et de carbonate de diméthyle (1:1:3) contenant 2% massique de carbonate de vinylène.

La viscosité dynamique de la composition obtenue n'a pas pu être mesurée avec un rhéomètre Bohlin CVO de la marque Malvern en raison d'une viscosité dynamique trop importante (nettement supérieure à 10 000 Pa.s à un gradient de cisaillement de 0,1 $s^{-1}$).

EXEMPLE 3

Cet exemple illustre la fabrication par un procédé en continu conforme à l'invention d'une électrode positive comprenant 70 % de masse solide par rapport à la masse totale de l'électrode.

Dans un premier temps, il est préparé une pâte d'électrode ionogel par introduction et malaxage en continu à 25°C des constituants de l'électrode en présence d'acétone dans un mélangeur à deux vis interpénétrantes co-rotatives tournant dans un fourreau fermé, l'introduction étant réalisée, en premier lieu, par l'introduction des constituants solides puis, en deuxième lieu, par l'introduction des constituants liquides. La composition de la pâte est la suivante : 65,8 % massique de $LiNi_{0,33}Mn_{0,33}Co_{0,33}O_2$, 2,8 % massique d'un additif électroniquement conducteur, 1,4 % massique du copolymère constitutif de la matrice polymérique (lequel copolymère est un copolymère comprenant des unités répétitives issues de la polymérisation du fluorure de vinylidène (96,7% en moles), d'acide acrylique (0,9% en moles) et d'hexafluoropropène (2,4 % en moles) et présentant une viscosité intrinsèque de 0,30 L/g dans du diméthylformamide à 25°C), 22,4 % massique d'acétone anhydre et 7,6 % massique d'électrolyte à 1M de $LiPF_6$ dans un mélange de carbonate d'éthylène et de carbonate de propylène (1:1) contenant 2% massique de carbonate de vinylène.

La viscosité dynamique de la composition a été mesurée sur un rhéomètre Bohlin CVO de la marque Malvern équipé d'un support Peltier et d'un mobile cône-plan de diamètre 40 mm et d'angle 4°. Pour ce faire, la pâte est déposée entre le support Peltier et le mobile à un entrefer de 150 $\mu$m, une trappe à solvant est ajoutée au système pour éviter l'évaporation trop rapide de l'acétone et la mesure est réalisée en mode viscosimétrie à un gradient de cisaillement de 0,1 $s^{-1}$ et 25°C sur un temps d'intégration de 5 secondes.

La valeur de viscosité dynamique obtenue est de 11 000 Pa.s.

Dans un deuxième temps, la pâte d'électrode ainsi formée est enduite, à la sortie du mélangeur, en continu sur un feuillard en aluminium d'épaisseur 20 $\mu$m,

puis séchée et calandrée, formant ainsi une électrode ionogel. Le grammage de l'électrode est de 19,5 mg/cm$^2$ (2,9 mAh/cm$^2$) pour une épaisseur de 95 $\mu$m. La capacité de l'électrode a été vérifiée en pile bouton face au lithium métal. La capacité totale mesurée est de 170 mAh/g et la capacité réversible est de 147 mAh/g lors du 1$^{er}$ cycle à C/20. La capacité réversible est de 143 mAh/g lors du 2$^{nd}$ cycle à C/20, ces données étant illustrées sur la figure 2, illustrant l'évolution de la tension U (en V) en fonction de la capacité C (en mAh/g), la courbe a) étant celle du 1$^{er}$ cycle et la courbe b) étant celle du 2$^{nd}$ cycle.

EXEMPLE 4

Cet exemple illustre la fabrication par un procédé en continu conforme à l'invention d'une électrode positive comprenant 80 % de masse solide par rapport à la masse totale de l'électrode.

Dans un premier temps, il est préparé une pâte d'électrode ionogel par introduction et malaxage en continu à 25°C des constituants de l'électrode en présence d'acétone dans un mélangeur à deux vis interpénétrantes co-rotatives tournant dans un fourreau fermé, l'introduction étant réalisée, en premier lieu, par l'introduction des constituants solides puis, en deuxième lieu, par l'introduction des constituants liquides. La composition de la pâte est la suivante : 75,2 % massique de $LiNi_{0,33}Mn_{0,33}Co_{0,33}O_2$, 3,2 % massique d'un additif électroniquement conducteur, 1,6 % massique du copolymère constitutif de la matrice polymérique (lequel copolymère est un copolymère comprenant des unités répétitives issues de la polymérisation du fluorure de vinylidène (96,7% en moles), d'acide acrylique (0,9% en moles) et d'hexafluoropropène (2,4 % en moles) et présentant une viscosité intrinsèque de 0,30 L/g dans du diméthylformamide à 25°C), 11,3 % massique d'acétone anhydre et 8,7 % massique d'électrolyte à 1M de $LiPF_6$ dans un mélange de carbonate d'éthylène et de carbonate de propylène (1:1) contenant 2% massique de carbonate de vinylène.

La viscosité dynamique de la composition obtenue n'a pas pu être mesurée avec un rhéomètre Bohlin CVO de la marque Malvern en raison d'une viscosité dynamique trop importante (nettement supérieure à 10 000 Pa.s à un gradient de cisaillement de 0,1 s$^{-1}$).

Dans un deuxième temps, la pâte d'électrode ainsi formée est mise en forme en bande *via* une filière plate placée à la sortie du mélangeur, la bande étant ensuite laminée pour réduire son épaisseur puis déposée par colamination sur un collecteur de courant en aluminium pour former l'électrode ionogel.

EXEMPLE 5

Cet exemple illustre la fabrication par un procédé en continu conforme à l'invention d'une électrode positive comprenant 90 % de masse solide par rapport à la masse totale de l'électrode.

Dans un premier temps, il est préparé une pâte d'électrode ionogel par introduction et malaxage en continu à 25°C des constituants de l'électrode en présence d'acétone dans un mélangeur à deux vis interpénétrantes co-rotatives tournant dans un fourreau fermé, l'introduction étant réalisée, en premier lieu, par l'introduction des constituants solides puis, en deuxième lieu, par l'introduction des constituants liquides. La composition de la pâte est la suivante : 84,6 % massique de $LiNi_{0,33}Mn_{0,33}Co_{0,33}O_2$, 3,6 % massique d'un additif électroniquement conducteur, 1,8 % massique du copolymère constitutif de la matrice polymérique (lequel copolymère est un copolymère comprenant des unités répétitives issues de la polymérisation du fluorure de vinylidène (96,7% en moles), d'acide acrylique (0,9% en moles) et d'hexafluoropropène (2,4 % en moles) et présentant une viscosité intrinsèque de 0,30 L/g dans du diméthylformamide à 25°C), 10 % massique d'électrolyte à 1M de $LiPF_6$ dans un mélange de carbonate d'éthylène et de carbonate de propylène (1:1) contenant 2% massique de carbonate de vinylène.

La viscosité dynamique de la composition obtenue n'a pas pu être mesurée avec un rhéomètre Bohlin CVO de la marque Malvern en raison d'une viscosité dynamique trop importante (nettement supérieure à 10 000 Pa.s à un gradient de cisaillement de 0,1 s$^{-1}$).

Dans un deuxième temps, la pâte d'électrode ainsi formée est mise en forme en bande *via* une filière plate placée à la sortie du mélangeur, la bande étant ensuite laminée pour réduire son épaisseur puis déposée par colamination sur un collecteur de courant en aluminium pour former l'électrode ionogel.

## Revendications

**1.** Procédé de fabrication d'une électrode comprenant une matrice polymérique piégeant un électrolyte, ledit procédé comprenant les étapes suivantes :

a) une étape de préparation d'une composition comprenant les ingrédients destinés à entrer dans la constitution de l'électrode ;
b) à partir de ladite composition, une étape de formation de l'électrode sur un support ;
**caractérisé en ce que** :

- la composition préparée lors de l'étape a) est une composition sous forme de pâte ayant une viscosité dynamique supérieure à 5000 Pa.s mesurée à un gradient de cisaillement de 0,1 s$^{-1}$ et à température ambiante ; et
- l'étape de préparation consiste en une introduction et un mélange des ingrédients destinés à entrer dans la constitution de l'électrode dans un mélangeur à deux vis interpénétrantes co-rotatives tournant dans

un fourreau fermé, ladite étape de préparation étant mise en oeuvre à une température inférieure à 100°C.

**2.** Procédé de fabrication selon la revendication 1, dans lequel la composition comprend, comme ingrédients constitutifs de l'électrode :

- au moins un matériau actif d'électrode ;
- au moins un polymère destiné à entrer dans la constitution de la matrice polymérique ;
- un électrolyte ;
- éventuellement au moins un additif conducteur électronique.

**3.** Procédé de fabrication selon la revendication 1 ou 2, dans lequel le ou les polymères sont choisis parmi les polymères gélifiants aptes à gélifier au contact de l'électrolyte et piéger ainsi l'électrolyte.

**4.** Procédé de fabrication selon la revendication 2 ou 3, dans lequel le ou les polymères sont choisi(s) parmi des polymères fluorés comprenant au moins une unité répétitive issue de la polymérisation d'un monomère fluoré et, de préférence, au moins une unité répétitive issue de la polymérisation d'un monomère comprenant au moins un groupe acide carboxylique, éventuellement sous forme d'un sel.

**5.** Procédé de fabrication selon l'une quelconque des revendications 2 à 4, dans lequel l'électrolyte est un électrolyte liquide comprenant au moins un solvant organique, au moins un sel métallique et éventuellement un additif appartenant à la catégorie des composés carbonatés.

**6.** Procédé de fabrication selon l'une quelconque des revendications 2 à 5, dans lequel la composition comprend, en outre, au moins un solvant du ou des polymères destinés à entrer dans la constitution de la matrice polymérique.

**7.** Procédé de fabrication selon la revendication 6, comprenant, en outre, après l'étape de formation, une étape d'évaporation du ou des solvants du ou des polymères destinés à entrer dans la constitution de la matrice polymérique.

**8.** Procédé de fabrication selon l'une quelconque des revendications 2 à 5, dans lequel la composition est dénuée de solvant(s) du ou des polymères destinés à entrer dans la constitution de la matrice polymérique.

**9.** Procédé de fabrication selon l'une quelconque des revendications précédentes, dans lequel l'étape de préparation est mise en oeuvre de manière continue.

**10.** Procédé de fabrication selon la revendication 6 ou 8, dans lequel l'étape de préparation est réalisée à température ambiante ou est réalisée à une température supérieure à la température ambiante mais inférieure à 100°C.

**11.** Procédé de fabrication selon la revendication 6, 8 ou 10, dans lequel l'étape de préparation est réalisée à une température supérieure à la température ambiante mais inférieure à la température d'ébullition du ou des solvants du ou des polymères destinés à entrer dans la constitution de la matrice polymérique, lorsque ce ou ces solvants sont présents dans la composition, ou lorsque ce ou ces solvants ne sont pas présents, à une température supérieure à la température ambiante mais inférieure à la température de fusion du ou des polymères destinés à entrer dans la constitution de la matrice polymérique.

**12.** Procédé de fabrication selon la revendication 2, 6 ou 8, dans lequel la composition à l'issue de l'étape de fabrication comprend de 50% à 80 % de masse solide par rapport à la masse totale de la composition, lorsqu'elle comprend un ou des solvants du ou des polymères destinés à entrer dans la constitution de la matrice polymérique ou comprend de 83 à 90 % de masse solide par rapport à la masse totale de la composition, lorsqu'elle ne comprend pas de solvant(s) du ou des polymères destinés à entrer dans la constitution de la matrice polymérique.

**Patentansprüche**

**1.** Verfahren zur Herstellung einer Elektrode, die eine Polymermatrix umfasst, die einen Elektrolyten einfängt, wobei das Verfahren die folgenden Schritte umfasst:

a) einen Schritt des Zubereitens einer Zusammensetzung, die die Bestandteile umfasst, die bestimmt sind, in den Aufbau der Elektrode einzugehen;
b) ausgehend von der Zusammensetzung einen Schritt des Bildens der Elektrode auf einem Träger;
**dadurch gekennzeichnet, dass**:

- die in Schritt a) zubereitete Zusammensetzung eine Zusammensetzung in Teigform ist mit einer dynamischen Viskosität von über 5000 Pa.s, gemessen bei einem Schergradienten von 0,1 $s^{-1}$ und bei Raumtemperatur; und
- der Zubereitungsschritt in einem Einleiten und einem Mischen der Bestandteile, die bestimmt sind, in den Aufbau der Elektrode einzugehen, in einem Mischer mit zwei korotatorischen, sich gegenseitig durchdringenden Schrauben besteht, die in einer geschlossenen Hülle drehen, wobei der Zubereitungsschritt bei einer Temperatur von unter 100 °C durchgeführt wird.

**2.** Herstellungsverfahren nach Anspruch 1, wobei die Zusammensetzung als konstitutive Bestandteile der Elektrode umfasst:

- mindestens ein aktives Elektrodenmaterial;
- mindestens ein Polymer, das bestimmt ist, in den Aufbau der Polymermatrix einzugehen;
- einen Elektrolyten,
- gegebenenfalls mindestens einen elektronischen leitenden Zusatz.

**3.** Herstellungsverfahren nach Anspruch 1 oder 2, wobei das oder die Polymere aus den gelbildenden Polymeren ausgewählt sind, die imstande sind, im Kontakt mit dem Elektrolyten zu gelieren und somit den Elektrolyten einzufangen.

**4.** Herstellungsverfahren nach Anspruch 2 oder 3, wobei das oder die Polymere aus den Fluorpolymeren ausgewählt ist/sind, die mindestens eine wiederkehrende Einheit umfassen, die aus der Polymerisierung eines Fluormonomers hervorgegangen ist und vorzugsweise mindestens eine wiederkehrende Einheit, die aus der Polymerisierung eines Monomers hervorgegangen ist, das mindestens eine Carbonsäuregruppe, gegebenenfalls in Form eines Salzes, umfasst.

**5.** Herstellungsverfahren nach einem der Ansprüche 2 bis 4, wobei der Elektrolyt ein flüssiger Elektrolyt ist, der mindestens ein organisches Lösungsmittel, mindestens ein Metallsalz und gegebenenfalls einen Zusatz umfasst, der zur Kategorie der kohlenstoffhaltigen Verbindungen gehört.

**6.** Herstellungsverfahren nach einem der Ansprüche 2 bis 5, wobei die Zusammensetzung ferner mindestens ein Lösungsmittel des oder der Polymere umfasst, die bestimmt sind, die den Aufbau der Polymermatrix einzugehen.

**7.** Herstellungsverfahren nach Anspruch 6, umfassend ferner nach dem Bildungsschritt einen Verdampfungsschritt des oder der Lösungsmittel des oder der Polymere, die bestimmt sind, in den Aufbau der Polymermatrix einzugehen.

**8.** Herstellungsverfahren nach einem der Ansprüche 2 bis 5, wobei die Zusammensetzung frei von Lösungsmittel(n) des oder der Polymere ist, die bestimmt sind, in den Aufbau der Polymermatrix einzugehen.

**9.** Herstellungsverfahren nach einem der vorangehenden Ansprüche, wobei der Zubereitungsschritt kontinuierlich durchgeführt wird.

**10.** Herstellungsverfahren nach Anspruch 6 oder 8, wobei der Zubereitungsschritt bei Raumtemperatur durchgeführt wird oder bei einer Temperatur über der Raumtemperatur, aber unter 100 °C durchgeführt wird.

**11.** Herstellungsverfahren nach Anspruch 6, 8 oder 10, wobei der Zubereitungsschritt bei einer Temperatur über der Raumtemperatur, aber unter der Siedetemperatur des oder der Lösungsmittel des oder der Polymere durchgeführt wird, die bestimmt sind, in den Aufbau der Polymermatrix einzugehen, wenn dieses oder diese Lösungsmittel in der Zusammensetzung vorhanden sind, oder wenn dieses oder diese Lösungsmittel nicht vorhanden sind, bei einer Temperatur über der Raumtemperatur, aber unter der Schmelztemperatur des oder der Polymere, die bestimmt sind, in den Aufbau der Polymermatrix einzugehen.

**12.** Herstellungsverfahren nach Anspruch 2, 6 oder 8, wobei die Zusammensetzung nach Abschluss des Herstellungsschritts 50 bis 80 % Festmasse im Verhältnis zur Gesamtmasse der Zusammensetzung umfasst, wenn sie ein oder Lösungsmittel des oder der Polymere umfasst, die bestimmt sind, in den Aufbau der Polymermatrix einzugehen, oder 83 bis 90 % Festmasse im Verhältnis zur Gesamtmasse der Zusammensetzung umfasst, wenn sie kein(e) Lösungsmittel des oder der Polymere umfasst, die bestimmt sind, in den Aufbau der Polymermatrix einzugehen.

## Claims

**1.** Method for manufacturing an electrode comprising a polymer matrix trapping an electrolyte, said method comprising the following steps:

a) a step of preparing a composition comprising the ingredients provided to enter into the constitution of the electrode;
b) a step of forming the electrode on a substrate, from said composition;
**characterized in that**:

- the composition prepared in step a) is a composition in the form of a paste having a dynamic viscosity greater than 5000 Pa.s measured at a shear rate of 0.1 $s^{-1}$ and at ambient temperature; and
- the preparing step consists of introducing and mixing the ingredients provided to enter

into the constitution of the electrode inside a mixer with two co-rotary interpenetrating screws rotating in a closed sleeve, said preparing step being implemented at a temperature less than 100°C.

2. Manufacturing method according to claim 1, wherein the composition comprises, as ingredients constituting the electrode:

- at least one electrode active material;
- at least one polymer provided to enter into the constitution of the polymer matrix;
- an electrolyte;
- optionally at least one electron conductor additive.

3. Manufacturing method according to claim 1 or 2, wherein the polymer or polymers are selected from gelling polymers suitable for gelling in contact with the electrolyte and thus trapping the electrolyte.

4. Manufacturing method according to claim 2 or 3, wherein the polymer or polymers are selected from fluorinated polymers comprising at least one repeat unit arising from the polymerization of a fluorinated monomer and, preferably, at least one repeat unit arising from the polymerization of a monomer comprising at least one carboxylic acid group, optionally in the form of a salt.

5. Manufacturing method according to any one of claims 2 to 4, wherein the electrolyte is a liquid electrolyte comprising at least one organic solvent, at least one metallic salt and optionally an additive belonging to the category of carbonaceous compounds.

6. Manufacturing method according to any one of claims 2 to 5, wherein the composition further comprises at least one solvent of the polymer or polymers provided to enter into the constitution of the polymer matrix.

7. Manufacturing method according to claim 6, further comprising, after the forming step, a step of evaporating the solvent or solvents of the polymer or polymers provided to enter into the constitution of the polymer matrix.

8. Manufacturing method according to any one of claims 2 to 5, wherein the composition is devoid of solvent or solvents of the polymer or polymers provided to enter into the constitution of the polymer matrix.

9. Manufacturing method according to any one of the preceding claims, wherein the preparing step is implemented continuously.

10. Manufacturing method according to claim 6 or 8, wherein the preparing step is carried out a ambient temperature or is carried out at a temperature greater than the ambient temperature but less than 100°C.

11. Manufacturing method according to claim 6, 8 or 10, wherein the preparing step is carried out at a temperature above the ambient temperature but less than the boiling temperature of the solvent or solvents of the polymer or polymers provided to enter into the constitution of the polymer matrix, when that solvent or those solvents are present in the composition or when that solvent or those solvents are not present, at a temperature greater than the ambient temperature but less than the melting temperature of the polymer or polymers provided to enter into the constitution of the polymer matrix.

12. Manufacturing method according to claim 2, 6 or 8, wherein the composition further to the manufacturing step comprises from 50% to 80 % of solid mass relative to the total mass of the composition, when it comprises a solvent or solvents of the polymer or polymers provided to enter into the constitution of the polymer matrix or comprises from 83 to 90 % of solid mass relative to the total mass of the composition, when it does not comprise a solvent or solvents of the polymer or polymers provided to enter into the constitution of the polymer matrix.

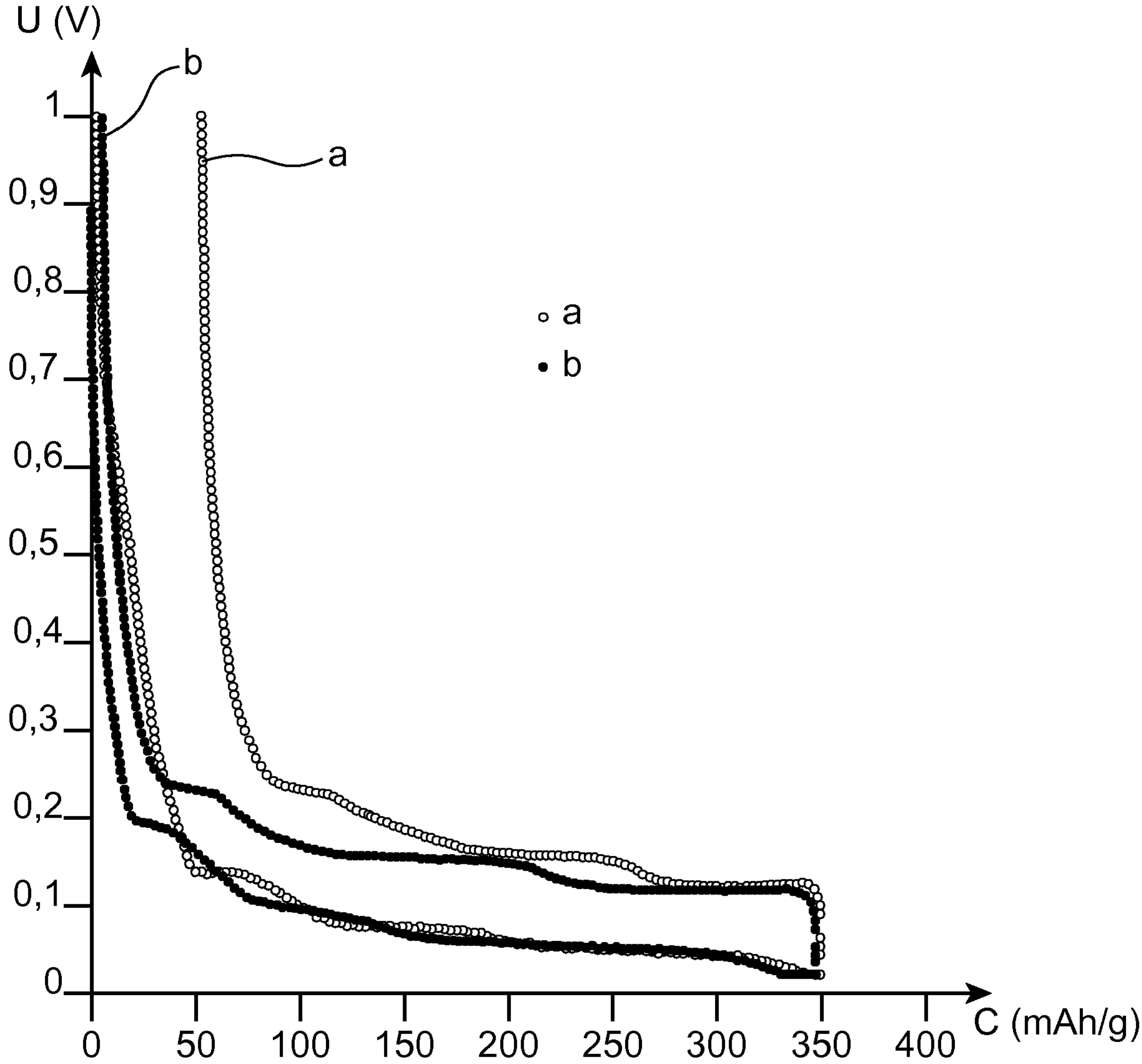
U (V)
1
0,9
0,8
0,7
0,6
0,5
0,4
0,3
0,2
0,1
0
0
50
100
150
200
250
300
350
400
C (mAh/g)
a
b
a
b

FIG. 1

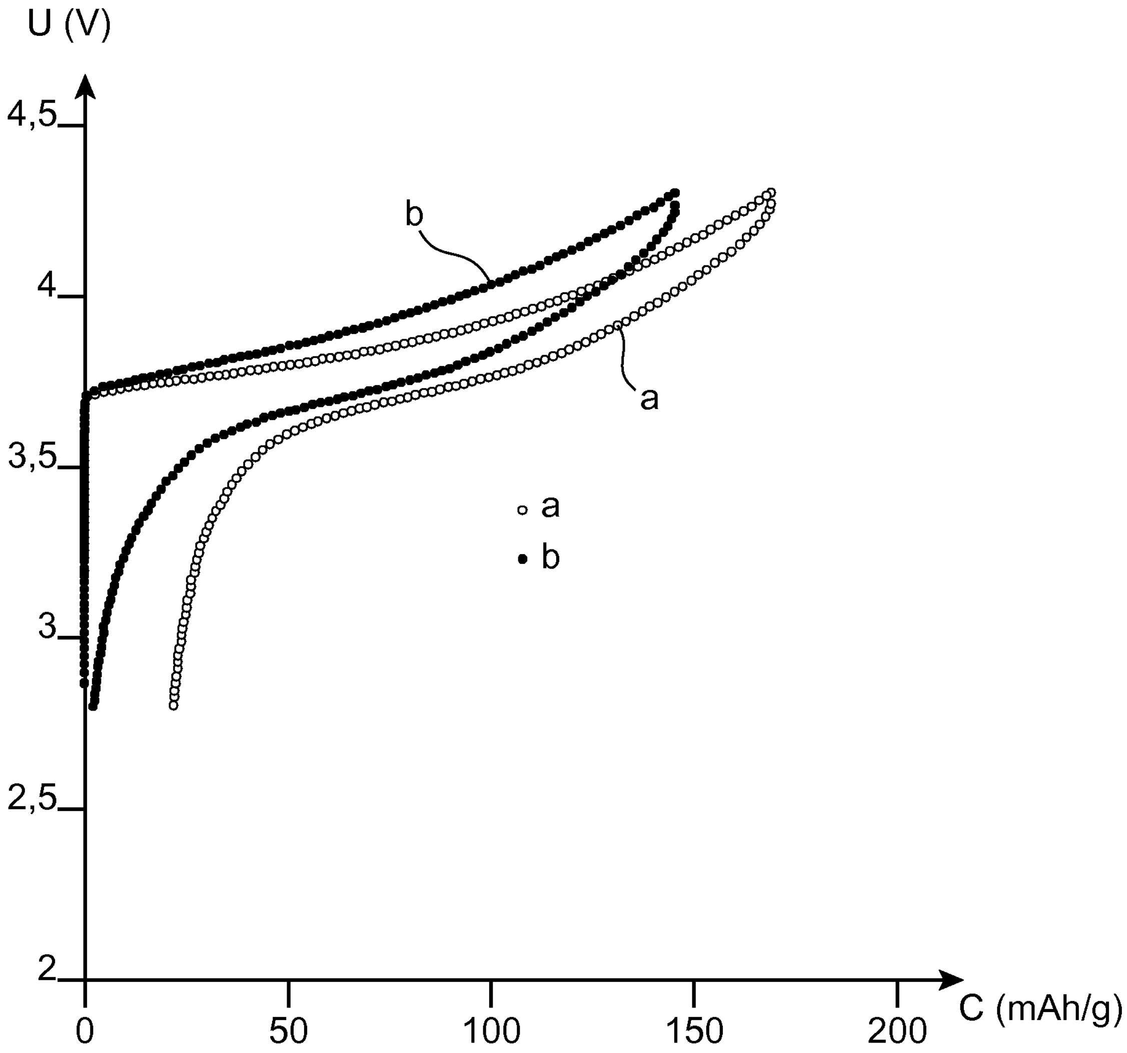


FIG. 2

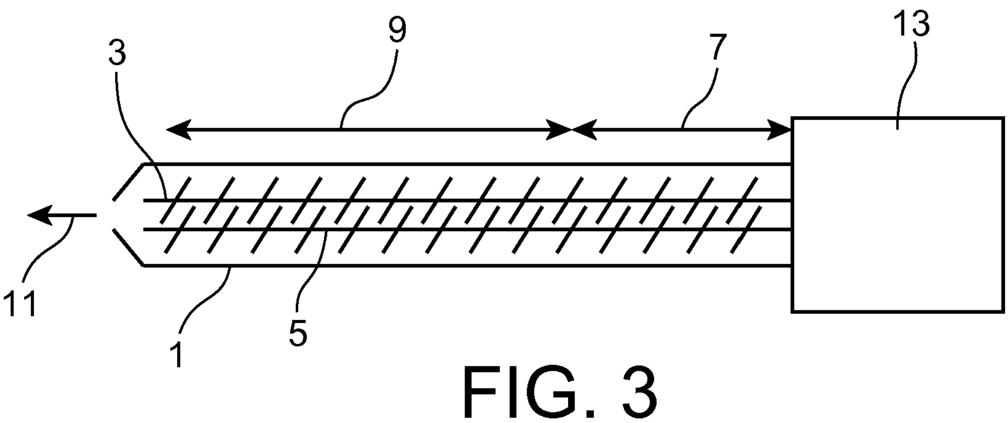


FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2015169835 A
- US 6203944 B
- WO 0003444 A